# EUROPÄISCHE PATENTSCHRIFT

(11) **EP 3 140 481 B1**
(45) Veröffentlichungstag und Bekanntmachung des Hinweises auf die Patenterteilung: **14.12.2022**
(21) Anmeldenummer: 15718200.7
(22) Anmeldetag: 21.04.2015
(51) Int. Cl.: F16F 9/54, F16F 9/56, E05F 5/02, E05F 5/10

(54) **FAHRZEUG MIT EINER STOSSDÄMPFERANORDNUNG ZWISCHEN DER FAHRZEUGKAROSSERIE UND EINER FAHRZEUGTÜR ODER FAHRZEUGKLAPPE**
VEHICLE WITH AN IMPACT DAMPING ARRANGEMENT BETWEEN THE VEHICLE BODY AND A VEHICLE DOOR OR VEHICLE PANEL
VÉHICULE COMPRENANT UN ENSEMBLE AMORTISSEUR ENTRE LA CARROSSERIE ET UNE PORTIÈRE OU UN CAPOT DU VÉHICULE

(30) Priorität: 07.05.2014 DE 102014208586
(43) Veröffentlichungstag der Anmeldung: 15.03.2017
(73) Patentinhaber: Bayerische Motoren Werke Aktiengesellschaft, 80809 München (DE)
(72) Erfinder: KOESTLER, Ulrich, 85241 Hebertshausen (DE); KIEFERL, Anton, 85301 Schweitenkirchen (DE); KNECHTEL, Marcus, 85551 Kirchheim (DE); SPRINGSKLEE, Markus, 80638 Muenchen (DE); WIDL, Walter, 81249 Muenchen (DE)
(86) Internationale Anmeldenummer: PCT/EP2015/058538
(87) Internationale Veröffentlichungsnummer: WO 2015/169577

(56) Entgegenhaltungen:
- EP-A1- 0 334 253
- DE-A1-102004 008 046
- US-A1- 2006 016 650

## Beschreibung

### TECHNISCHES GEBIET

Die Erfindung betrifft ein Fahrzeug mit zumindest einer einen ersten Körper bildenden Fahrzeugtür oder Fahrzeugklappe und einer einen zweiten Körper bildenden Fahrzeugkarosserie.

Bei einem Fahrzeug ist üblicherweise die Fahrzeugtür oder Fahrzeugklappe (Karosserieklappe eines Fahrzeugs) schwenkbar an der Fahrzeugkarosserie angebracht und im geschlossenen Zustand mittels zumindest eines mit einem Schließelement, beispielsweise einem Schließbügel oder einer Sperrklinke, zusammenwirkenden Schlosses an der Fahrzeugkarosserie festlegbar. Ein solches Fahrzeug ist mit einer Stoßdämpferanordnung zum Dämpfen von Stößen zwischen der Fahrzeugkarosserie und der Fahrzeugtür oder Fahrzeugklappe beim Schließen der Fahrzeugtür oder Fahrzeugklappe versehen, wobei die Stoßdämpferanordnung eine Dämpfungsvorrichtung aufweist, die zwischen der Fahrzeugkarosserie und der Fahrzeugtür oder Fahrzeugklappe wirksam angeordnet ist und die einen ersten Bewegungsabschnitt, in dem eine Dämpfung erfolgt, und einen zweiten Bewegungsabschnitt, in dem keine Dämpfung erfolgt, aufweist.

Beim Schließen beispielsweise einer Frontklappe eines Fahrzeugs kann diese, wenn sie mit zu viel Schwung geschlossen wird, auf die Scheinwerfer und die Frontverkleidung (Nieren) aufschlagen. Daher sind bislang ausreichend große Fugen zwischen der Frontklappe und den Scheinwerfern bzw. der Frontverkleidung erforderlich, um eine Beschädigung durch ein solches Aufschlagen zu vermeiden. Eine Mindestfuge kann dabei ca. 3,5 mm (also nominal ca. 5,3 mm ± 1,8 mm) sein. Insbesondere aus optischen Gründen sollen diese Fugen zwischen Frontklappe und Frontverkleidung jedoch immer kleiner werden.

Weiter ist eine Mindestschließgeschwindigkeit von ca. 1,2 bis 1,5 m/s für das Schloss bzw. die Schlösser erforderlich, um die Frontklappe sicher zu verschließen. Eine Beschädigung von Bauteilen wie Kühlergrill, Scheinwerfer, Stoßfänger und/oder Seitenwand kann dabei schon bei einer Geschwindigkeit von 2,5 bis 3,0 m/s auftreten ("Misuse-Geschwindigkeit"). Weiter kann bei einem solchen Aufschlagen der Frontklappe auch eine unbeabsichtigte und unbemerkte Verstellung der Scheinwerfereinstellung erfolgen.

### STAND DER TECHNIK

Im Allgemeinen erfolgt daher eine Dämpfung der Bewegung der Frontklappe (oder auch von Türen oder anderen Karosserieklappen eines Fahrzeugs) vor dem Auftreffen auf das Schloss. Hierzu können beispielsweise dämpfende Schlösser, einschubgedämpfte Gasfedern und dämpfende Puffer verwendet werden.

Im Schloss integrierte Elemente können eine Dämpfung bewirken bis die Fahrzeugklappe annähernd geschlossen ist. Dies benötigt somit viel Schließenergie und die Dämpfung erfolgt erst kurz vor dem Schlosskontakt. Beispielsweise kann eine Schließgeschwindigkeit von ca. 2 m/s (mit Dämpfer) zum sicheren Schließen erforderlich sein (ohne Dämpfer ca. 1,5 m/s).

Bei Gasfedern, insbesondere einschubgedämpften Gasfedern, erfolgt eine voreilende Dämpfung. Solche Gasfedern weisen allerdings eine geringe Wirksamkeit auf und stellen somit keine optimale Dämpfung sicher. Außerdem sind derartige Gasfedern teuer.

Bei herkömmlichen Frontklappenschlössern wird, um die Frontklappe zu öffnen, diese um ca. 20 bis 35 mm angehoben. Dies entspricht der "Fanghakenstellung". Fahrzeuge mit in die Frontklappe integrierten Lufteinlässen können außerdem einen ausfahrbaren Griff aufweisen, um die Frontklappe anzuheben. Dies ist jedoch bei eingeschnittenen oder aufliegenden Frontklappen, wie sie oftmals Verwendung finden, nicht möglich.

Die obigen Dämpfungssysteme weisen Nachteile dahingehend auf, dass die Dämpfung erst dann beginnt, wenn Schloss und Schließbügel schon im Eingriff sind bzw. kurz vor dem Eingriff stehen. Da die Dämpfung spät beginnt, wird auch noch während des Schließvorganges gedämpft und damit der Schließkomfort verschlechtert. Hierdurch wird der Benutzer animiert, die Frontklappe schwungvoll zu schließen. Weiter kann die Bandbreite zwischen Mindestschließgeschwindigkeit und Durchschlagen klein sein, insbesondere aufgrund des Erfordernisses der geringen Spaltbreiten. Dadurch ist ein Durchschlagen der Klappe auf benachbarte Bauteile möglich, insbesondere wenn die Frontklappe schwungvoll geschlossen wird.

Die DE 10 2004 008 046 A1 offenbart einen Anschlagpuffer für eine Fahrzeugtür oder Fahrzeugklappe, der einen Grundkörper aus einem elastischen Material aufweist, wobei sich in dem Grundkörper zumindest ein Hohlraum befindet, der bevorzugt vollständig mit einer Flüssigkeit gefüllt ist. Beim Verformen des Anschlagpuffers wird aufgrund der Elastizität des elastischen Materials und der Viskosität der Füllung Energie absorbiert. Beim Schließen der Fahrzeugtür oder Fahrzeugklappe wird dazu ein Druckfluid aus einer ersten Kammer des Anschlagpuffers durch eine in einer Membran vorgesehene Öffnung in eine zweite Kammer gedrückt. Dabei wird während der Kompression ein mit Axialrillen versehener spitz zulaufender Ventilkörper in die Membranöffnung hinein bewegt, wodurch der Öffnungsquerschnitt verringert wird und damit die Dämpfungskraft ansteigt.

Die DE 103 60 833 A1 betrifft eine Gasfeder für eine Frontklappe eines Fahrzeugs. Als Problemstellung wird dort beschrieben, dass herkömmliche Gasfedern, die das Gewicht einer Frontklappe beim Öffnen beziehungsweise Schließen der Frontklappe abstützen, den Nachteil aufweisen, dass im Falle einer Kollision eines Radfahrers oder eines Fußgängers mit der Frontklappe noch eine Federkraftwirkung der Gasfeder vorhanden ist, die ein Nachgeben der Frontklappe im Bereich der Anbindung der Gasfeder aufgrund der dort noch vorhandenen Federkraft erschweren. Zur Lösung dieser Problematik kann die Gasfeder im geschlossenen Zustand der Frontklappe noch einen zusätzlichen Weg in Richtung Kompression gehen, auf dem nur eine geringe Dämpfung erfolgt, da in diesem Bereich des zusätzlichen Wegs die Dämpfung der Gasfeder reduziert ist.

Die DE 31 50 081 A1 betrifft einen Luftdruck-Stoßdämpfer. Als Problem wird dort angegeben, dass derartige Luftdruck-Stoßdämpfer aufgrund der Kompressibilität der Luft zum Zurückfedern neigen. Um dieses Problem zu lösen, weist die Kompressionskammer des Luftdruck-Stoßdämpfers eine Verbindung zwischen der Kompressionskammer und der Atmosphäre auf, wobei in dieser Verbindung ein Drosselventilelement vorgesehen ist. Über diese gedrosselte Verbindung zur Atmosphäre kann bei der Kompression des Luftdruck-Stoßdämpfers Luft aus der Kompressionskammer kontrolliert austreten, sodass es nicht zu einem unerwünschten Druckanstieg in der Kompressionskammer kommt, welcher zu einem Zurückprellen des Kolbens führen würde.

Die FR 2 751 714 A1 weist ein Bremssystem für eine Einheit aus zwei mobilen Organen auf. Dieses Bremssystem ist beispielsweise für aus einer Aufnahmevorrichtung herausfahrbare Fahrzeugaschenbecher vorgesehen. Der bewegliche Teil des Fahrzeugaschenbechers wird federbeaufschlagt in die geöffnete Position gedrückt. Eine Zahnrad-Zahnstangen-Anordnung wirkt als Bremselement, wobei das mit Zahnstangen in Eingriff befindliche Zahnrad als Reibungsbremse wirkt. Das Zahnrad steht nicht über den vollständigen Bewegungsweg des Aschenbechers mit den Zahnstangen in Eingriff, sondern lediglich während des Herausfahrens des Aschenbechers. Im eingeschobenen Zustand und im ausgefahrenen Zustand steht das Zahnrad außer Eingriff mit den Zahnstangen. In der geschlossenen Stellung des Aschenbechers, in der ein nicht näher beschriebenes Verriegelungselement wirksam ist, steht der Aschenbecher unter voller Druckwirkung der Federkraft, während das als Bremselement wirkende Zahnrad außer Eingriff mit den Zahnstangen ist. In diesem geschlossenen Zustand steht somit der bewegliche Teil des Aschenbechers unter der Federkraft, die von dem Verriegelungselement abgestützt werden muss. Demzufolge wirkt die Federkraft auf den Aschenbecher auch beim Hineinschieben und während des Verriegelungsvorgangs. Die Einschubbewegung wird also bis einschließlich der erfolgten Verriegelung durch die ihr entgegenwirkende Federkraft gedämpft.

Die JP 2010-228 675 A zeigt einen Stopper für eine Haube, der durch die Bewegung eines stoßabsorbierenden beweglichen Gliedes den beim Schließen der Haube auftretenden Stoß absorbieren soll. Dieses stoßabsorbierende Element kann entweder an der Haube oder an einem Fahrzeugkörper vorgesehen sein. Ein beweglicher, mit einem Kolben versehener Stößel ist gegen die Kraft einer Feder in eine zylinderartige Stößelaufnahme hineinbewegbar. Bei einer Variante ist die Feder, die in Bewegungsrichtung des Stößels verläuft, derart nach einwärts des Zylinders gebogen, dass der Stößel über einen Federtotpunkt hinaus bewegt wird, wobei er in der Übertotpunktlage von der Feder weiter zurückgezogen wird. Zu welchem Zeitpunkt der kolbenartige Stößel von der Feder in die Aufnahme hineingezogen wird bleibt offen.

Die US 5,697 477 A zeigt und beschreibt einen Luftdruckdämpfer, der als Kolben-Zylinder-Einheit ausgeführt ist und der beispielsweise als Dämpfer für den Handschuhfachdeckel in einem Automobil einsetzbar ist. Die Funktionsweise dieses Dämpfers besteht darin, dass bei der Bewegung des Kolbens Luft von der auf der einen Seite des Kolben gelegenen einen Kammer, deren Volumen bei der Bewegung verkleinert wird, durch eine Drosselöffnung im Kolben in die auf der anderen Seite des Kolbens gelegene andere Kammer strömt, die bei der Bewegung des Kolbens vergrößert wird. Die Intensität der Dämpfung wird durch die Größe der Drosselöffnung bestimmt. Ein O-Ring ist als Kolbenring in eine Nut am Umfang des Kolbens eingesetzt und sorgt über seine bei Bewegung des Kolbens an der Zylinderwand ausgeübte Reibung ebenfalls für eine Bremskraft der Kolbenbewegung. Kurz vor dem Erreichen der maximal ausgefahrenen Position der mit dem Kolben verbundenen Kolbenstange gerät der Kolben in einen Bereich des Zylinders, in weichem sich der Durchmesser der Zylinderwand geringfügig graduell verringert, sodass die Reibungskraft, die zwischen dem O-Ring und der Zylinderwand wirkt, verstärkt wird, wodurch auch die auf die Kolbenbewegung ausgeübte Bremskraft verstärkt wird. Die Öffnungsbewegung des Handschuhfachdeckels wird also kurz vor Erreichen der maximalen Öffnungslage des Handschuhfachdeckels abgebremst. Zusätzlich zu der Drosselöffnung im Kolben können in der Zylinderwand Axialnuten vorgesehen sein, die ebenfalls ein Vorbeiströmen der Luft am Kolben während dessen Bewegung ermöglichen. Diese Axialnuten sind jedoch nicht in dem Bereich vorgesehen, in dem sich die Zylinderwand verjüngt, sodass dort die volle vorstehend beschriebene Bremswirkung erhalten bleibt. Der hier gezeigte und beschriebene Dämpfer dient dazu, die Öffnungsbewegung einer Klappe zu dämpfen.

Die DE 201 07 426 U1 beschreibt einen Bremsregler mit Luft- oder Flüssigkeitsdämpfung. Ein solcher Bremsregler ist insbesondere zur Endlagendämpfung von Schubladen oder Türen vorgesehen. Er ist als Kolben-Zylinder-Einheit ausgestaltet, wobei in einem Bereich der Zylinderwand eine Axialnut vorgesehen sein kann, durch die Luft am Kolben vorbei von der auf einer Seite des Kolbens gebildeten Luftkammer in die auf der anderen Seite des Kolbens gebildete Luftkammer strömen kann. Des Weiteren ist auch im Kolben eine nach Art eines Rückschlagventils ausgebildete Strömungsöffnung vorgesehen. Bei der Kompression der Kolben-Zylinder-Einheit ist dieses Rückschlagventil geschlossen und die Luft im vor dem Kolben liegenden Zylinderraum wird komprimiert, wodurch eine Dämpfungskraft aufgebaut wird. Erreicht der Kolben nun den Bereich des Zylinders, in dem die Axialnut in der Zylinderwand vorgesehen ist, so kann Luft aus dem Kompressionsraum am Kolben vorbei in den Luftraum hinter dem Kolben strömen und die Dämpfungskraft wird reduziert. Kurz vor Erreichen der maximal eingeschobenen Position des Kolbens ist in der Zylinderwand eine weitere Luftabströmnut vorgesehen, durch die dann ein weiterer Druckabbau im Kompressionsraum erfolgt. Dieser weitere Druckabbau soll derart erfolgen, dass der Überdruck im Kompressionsraum blitzartig gänzlich abgebaut wird. In diesem letzten Wegstück des Kolbens besteht also keine Dämpfungskraft mehr. Durch diesen schlagartigen Abbau der Dämpfungskraft in der Endlage des Kolbens wird erreicht, dass die Kompressionsbewegung der Kolben-Zylinder-Einheit am Ende der Kolbenbewegung nicht zu einer Rückstoßreaktion aufgrund des Überdrucks im Kompressionsraum führt.

Die EP 0 334 253 A1 zeigt und beschreibt eine Gasfeder, die zum Abstützen des Gewichts eines bewegbaren Bauteils, beispielsweise einer Kofferraumklappe, in einem Motorfahrzeug zwischen der Karosserie des Motorfahrzeugs und dem beweglichen Konstruktionselement vorgesehen ist. Es ist dort eine Vorrichtung zur Beherrschung der Reaktionskräfte der Gasfeder vorgesehen, die bewirkt, dass die Gasfeder dann, wenn das bewegliche Bauteil (zum Beispiel die Kofferraumklappe) geschlossen ist, sich also die Gasfeder in ihrem komprimierten Zustand befindet, keine federbedingten Druckkräfte auf die Kofferraumklappe mehr ausgeübt werden. Kurz vor dem vollständigen Schließen der Kofferraumklappe läuft ein von der Federkraft beaufschlagter Federteller der Gasfeder auf einen an der Karosserie vorgesehenen Anschlag auf und stützt sich daran ab. Die Federkraft der mit ihrem oberen Ende an der Karosserie befestigten Gasfeder wird im vollständig geschlossenem Zustand der Fahrzeugklappe über den Anschlag wieder in die Fahrzeugkarosserie eingeleitet, so dass im geschlossenen Zustand der Fahrzeugklappe keine Federkraft auf die Struktur der Fahrzeugklappe einwirkt.

### DARSTELLUNG DER ERFINDUNG

Es ist die Aufgabe der vorliegenden Erfindung, ein Fahrzeug mit einer Fahrzeugkarosserie und zumindest einer Fahrzeugtür oder Fahrzeugklappe mit einer Stoßdämpferanordnung zum Dämpfen von Stößen zwischen der Fahrzeugkarosserie und der Fahrzeugtür oder Fahrzeugklappe bereitzustellen, bei dem zumindest einer oder mehrere der oben genannten Nachteile verringert werden oder im Wesentlichen nicht auftreten und bei dem insbesondere die Gefahr des Aufschlagens einer Frontklappe auf die Scheinwerfer unterbunden ist.

Diese Aufgabe wird durch das Fahrzeug mit den Merkmalen des Patentanspruchs 1 gelöst.

Erfindungsgemäß ist dazu vorgesehen, dass die Stoßdämpferanordnung so ausgelegt ist, dass zuerst der erste Bewegungsabschnitt und dann der zweite Bewegungsabschnitt durchlaufen werden, wenn sich die Fahrzeugtür oder Fahrzeugklappe auf die Fahrzeugkarosserie zu bewegt, wobei der erste Bewegungsabschnitt so angeordnet ist, dass die Bewegung entlang des ersten Bewegungsabschnitts beendet ist wenn das Schloss und das Schließelement miteinander in Kontakt geraten.

### VORTEILE

Durch die erfindungsgemäße Lösung ist es möglich, die Schließgeschwindigkeit bis auf eine für die Schließfunktion im Schloss erforderliche minimale Geschwindigkeit abzubremsen und dennoch ein sicheres Einrasten des Schließelements in das Schloss zu gewährleisten. Die Schließgeschwindigkeit wird somit gedämpft bevor und nur bis das Schließelement auf das Schloss auftrifft. Der Bediener wird also nicht verleitet, die Fahrzeugklappe mit besonders viel Schwung zu schließen. Die Dämpfung kann auch geschwindigkeitsabhängig erfolgen, um zu gewährleisten, dass unabhängig von der vom Bediener aufgebrachten Schließgeschwindigkeit stets die für das sichere Schließen des Schlosses erforderliche Minimalgeschwindigkeit am Ende der Dämpfung, also am Ende des ersten Bewegungsabschnitts, anliegt.

Bevorzugte Ausführungsformen und besondere Aspekte der Erfindung ergeben sich aus den abhängigen Ansprüchen, den Zeichnungen und der vorliegenden Beschreibung.

Gemäß einem weiteren Aspekt der Erfindung ist ein Verfahren zum Dämpfen von Stößen zwischen einer Fahrzeugkarosserie und einer Fahrzeugtür oder Fahrzeugklappe eines erfindungsgemäß ausgestalteten Fahrzeugs angegeben. Das Verfahren umfasst ein Durchlaufen eines ersten Bewegungsabschnitts der Dämpfungsvorrichtung, in dem eine Dämpfung erfolgt bis das Schloss und das Schließelement in Kontakt geraten, und ein anschließendes Durchlaufen eines zweiten Bewegungsabschnitts der Dämpfungsvorrichtung, in dem keine oder eine sehr geringe Dämpfung erfolgt.

Das Vorsehen einer Stoßdämpferanordnung gemäß den hier beschriebenen Ausführungsformen bietet eine wegabhängige Dämpfung, und insbesondere eine weg- und geschwindigkeitsabhängige Dämpfung. Damit kann eine Beschädigung des ersten und/oder zweiten Körpers, die beispielsweise miteinander verriegelt, jedoch nicht in unmittelbaren Kontakt gebracht werden sollen, verhindert werden. Gleichzeitig kann durch den zweiten Bewegungsabschnitt, der keine oder eine sehr geringe Dämpfung aufweist, genug verbleibende Stoßenergie bereitgestellt werden, um beispielsweise einen sichereren und zuverlässigen Kraftschluss und/oder Formschluss des Schließelements mit dem Schloss zu gewährleisten.

Die Dämpfung beginnt dabei früh und kann in etwa beim ersten Schlosskontakt des Schließelements beendet sein. Der Dämpfungsweg kann vor einem Auftreffen auf das Schloss im Vergleich zu herkömmlichen Stoßdämpferanordnungen vergrößert sein (z.B. 50 mm). Die Dämpfung wirkt nur vor Erreichen des Zeitpunkts, bei dem Schloss und Schließelement in Kontakt treten. Die Geschwindigkeit kann also soweit reduziert werden, dass nur noch die Schließgeschwindigkeit des Schlosses anliegt, bei der das Schloss sicher schließt. Die Stoßdämpferanordnung gemäß den hier beschriebenen Ausführungsformen bietet damit eine weg- und geschwindigkeitsabhängige Dämpfung.

Bei Fahrzeugen kann so vermieden werden, dass aus Klappe oder Fahrzeugstruktur ein (z.B. 50 mm) langer Stößel der Stoßdämpferanordnung vorsteht. Insbesondere kann sich ein Teil (z.B. ein Gummi-Pin) an der Klappe befinden und das Gegenstück (die Dämpfungsvorrichtung, die die Dämpfung enthält) kann in der Karosserie abtauchen. Es kann somit eine Aufteilung des Stößelhubs stattfinden, und der Benutzer sieht keinen überlangen Stößel. Gemäß hier beschriebener Ausführungsformen ist auch eine Fugenreduktion am Fahrzeug möglich, was unter anderem eine ansprechende Optik bewirkt, da kleine Fugen (Karosseriespalte) vom Fahrzeugkäufer als hochwertige Eigenschaft erachtet werden.

### KURZE BESCHREIBUNG DER ZEICHNUNGEN

Ausführungsbeispiele der Erfindung sind in den Figuren dargestellt und werden im Folgenden näher beschrieben. Es zeigen:
- Fig. 1: eine schematische Darstellung einer Stoßdämpferanordnung gemäß Ausführungsformen der Erfindung mit einem Translationsdämpfer.
- Fig. 2: eine perspektivische Ansicht der Stoßdämpferanordnung der Figur 1 beim Durchlaufen des ersten Bewegungsabschnitts und des zweiten Bewegungsabschnitts gemäß Ausführungsformen der Erfindung.
- Fig. 3A und 3B: schematische Darstellungen einer Stoßdämpferanordnung gemäß weiteren Ausführungsformen der Erfindungmit einem Translationsdämpfer.
- Fig. 4A und 4B: schematische Darstellungen einer Stoßdämpferanordnung gemäß weiteren Ausführungsformen der Erfindungmit einem Translationsdämpfer.
- Fig. 5: eine schematische Darstellung einer Stoßdämpferanordnung gemäß Ausführungsformen der Erfindung mit einem Translationsdämpfer in Relation zu einer Motorhaube.
- Fig. 6A bis 6C: schematische Darstellungen einer Stoßdämpferanordnung gemäß Ausführungsformen der Erfindung mit einem Rotationsdämpfer.
- Fig. 7A bis 7F: schematische Darstellungen einer Stoßdämpferanordnung gemäß weiteren Ausführungsformen der Erfindung mit einem Rotationsdämpfer.

### DARSTELLUNG VON BEVORZUGTEN AUSFÜHRUNGSBEISPIELEN

Im Folgenden werden, sofern nicht anders vermerkt ist, für gleiche und gleichwirkende Elemente gleiche Bezugszeichen verwendet.

Gemäß Ausführungsformen, ist eine Stoßdämpferanordnung in einem Fahrzeug zum Dämpfen von Stößen zwischen mindestens einem ersten Körper, zum Beispiel einer Fahrzeugtür oder einer Fahrzeugklappe (Karosserieklappe), und einem zweiten Körper, zum Beispiel einer Fahrzeugkarosserie, angegeben. Die Stoßdämpferanordnung umfasst eine Dämpfungsvorrichtung, die zwischen dem ersten Körper und dem zweiten Körper anordenbar ist. Die Dämpfungsvorrichtung weist einen ersten Bewegungsabschnitt, in dem eine Dämpfung erfolgt, und einen zweiten Bewegungsabschnitt, in dem keine oder eine sehr geringe Dämpfung erfolgt, auf. Die Stoßdämpferanordnung ist ausgelegt, dass zuerst der erste Bewegungsabschnitt und dann der zweite Bewegungsabschnitt durchlaufen werden, wenn sich der erste Körper und der zweite Körper aufeinanderzu bewegen.

Die Stoßdämpferanordnung gemäß den hier beschriebenen Ausführungsformen bietet eine wegabhängige Dämpfung, und insbesondere eine weg- und geschwindigkeitsabhängige Dämpfung. Damit kann eine Beschädigung des ersten und/oder zweiten Körpers, die beispielsweise miteinander in Kontakt gebracht werden sollen, verhindert werden. Gleichzeitig kann durch den zweiten Bewegungsabschnitt, der keine oder eine sehr geringe Dämpfung aufweist, genug Stoßenergie bereitgestellt werden, um beispielsweise einen sichereren und zuverlässigen Kraftschluss und/oder Formschluss zwischen dem ersten Körper und dem zweiten Körper zu gewährleisten.

In der vorliegenden Offenbarung bezieht sich der Begriff "Bewegungsabschnitt" der Dämpfungsvorrichtung im Allgemeinen auf einen Abschnitt einer Relativbewegung zweier Elemente der Dämpfungsvorrichtung zueinander. Dies können beispielsweise ein Zylinder und ein im Zylinder beweglicher Kolben sein. In einem anderen Beispiel können es ein drehbares Dämpfungsmittel und ein in das Dämpfungsmittel eingreifende Eingriffselement sein.

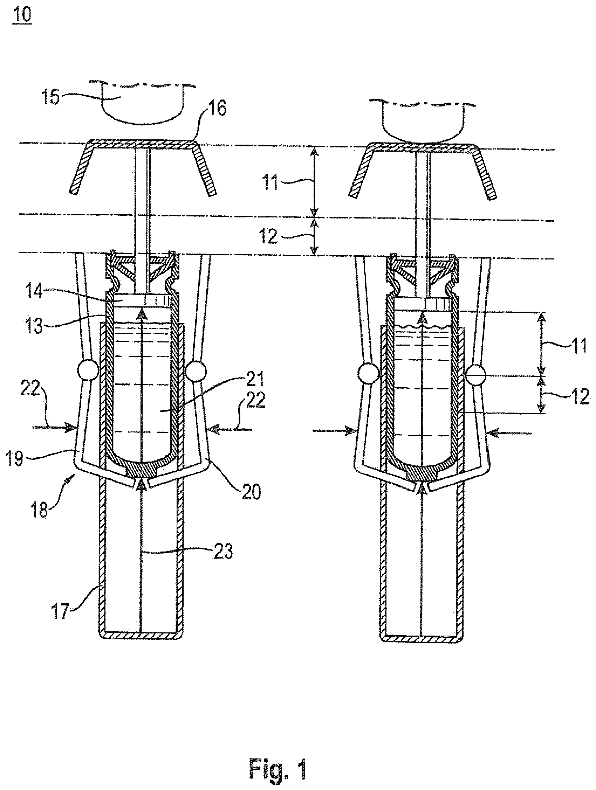

Figur 1 zeigt eine schematische Darstellung einer Stoßdämpferanordnung 10 gemäß Ausführungsformen mit einem Translationsdämpfer. Im linken Abschnitt der Figur 1 ist die Stoßdämpferanordnung 10 vor dem Auftreffen beispielsweise einer Fahrzeugklappe dargestellt, und im rechten Abschnitt der Figur 1 ist die Stoßdämpferanordnung 10 beim Auftreffen beispielsweise der Fahrzeugklappe dargestellt.

Die Stoßdämpferanordnung 10 umfasst eine Dämpfungsvorrichtung, die zwischen dem ersten Körper und dem zweiten Körper anordenbar ist. Die Dämpfungsvorrichtung weist einen ersten Bewegungsabschnitt 11, in dem eine Dämpfung erfolgt, und einen zweiten Bewegungsabschnitt 12, in dem keine Dämpfung erfolgt, auf. Die Stoßdämpferanordnung 10 ist so ausgelegt, dass zuerst der erste Bewegungsabschnitt 11 und dann der zweite Bewegungsabschnitt 12 durchlaufen werden, wenn sich der erste Körper und der zweite Körper aufeinanderzu bewegen.

Gemäß Ausführungsformen, umfasst die Dämpfungsvorrichtung einen Zylinder 13 und einen im Zylinder 13 beweglichen Kolben 14, wobei ein Bewegungsweg des Kolbens 14 im Zylinder 13 wenigstens den ersten Bewegungsabschnitt 11 umfasst. Beispielsweise entspricht der erste Bewegungsabschnitt 11 einem ersten Abschnitt der Innenseite des Zylinders 13, und der zweite Bewegungsabschnitt 12 entspricht einem zweiten Abschnitt der Innenseite des Zylinders 13.

Typischerweise ist die Dämpfungsvorrichtung eine hydraulische oder pneumatische Dämpfungsvorrichtung. Hierzu kann im Zylinder 13 eine Flüssigkeit oder ein Gas 21 vorhanden sein, die bzw. das als Mittel zur Aufnahme der Stoßenergie insbesondere beim Auftreffen des ersten Körpers auf den zweiten Körper dient und so die Dämpfung bewirkt.

In einigen Ausführungsformen umfasst die Stoßdämpferanordnung 10 ein Kontaktelement 15, das am ersten Körper, beispielsweise an einer Fahrzeugtür oder Fahrzeugklappe, anordenbar ist. Die Dämpfungsvorrichtung kann am zweiten Körper, beispielsweise an einer Fahrzeugkarosserie, anordenbar sein. Das Kontaktelement 15 kann so ausgelegt sein, dass es, wenn sich der erste Körper und der zweite Körper aufeinanderzu bewegen, den Kolben 14 oder eine Kontaktfläche 16 des Kolbens 14 kontaktiert, wie es im rechten Abschnitt der Figur 1 gezeigt ist. Die Dämpfungsvorrichtung kann insbesondere ausgelegt sein, dass nach dem Auftreffen des Kontaktelements 15 auf den Kolben 14 oder auf die Kontaktfläche 16 des Kolbens 14 zuerst der erste Bewegungsabschnitt 11 und dann der zweite Bewegungsabschnitt 12 durchlaufen werden. Gemäß einigen Ausführungsformen kann das Kontaktelement 15 ein einstellbarer Anschlag, beispielsweise an einer Fahrzeugklappe oder Fahrzeugtür, sein.

In typischen Ausführungsformen kann die Stoßdämpferanordnung 10 eine Aufnahmevorrichtung 17 für die Dämpfungsvorrichtung umfassen, wobei die Dämpfungsvorrichtung, insbesondere der Zylinder 13 der Dämpfungsvorrichtung, in der Aufnahmevorrichtung 17 beweglich ist, wobei der Bewegungsweg des Kolbens 14 im Zylinder 13 den ersten Bewegungsabschnitt 11 und ein Bewegungsweg der Dämpfungsvorrichtung, insbesondere des Zylinders 13, in der Aufnahmevorrichtung 17 den zweiten Bewegungsabschnitt 12 umfassen kann. Gemäß einigen Ausführungsformen kann die Aufnahmevorrichtung 17 eine Führung für die Dämpfungsvorrichtung bereitstellen.

Gemäß einigen Ausführungsformen umfasst die Stoßdämpferanordnung 10 eine Haltevorrichtung 18, die ausgelegt ist, um die Dämpfungsvorrichtung in der Aufnahmevorrichtung 17 in einer ersten Position zu haften, während der erste Bewegungsabschnitt 11 durchlaufen wird, und die ausgelegt ist, um die Dämpfungsvorrichtung freizugeben, so dass die Dämpfungsvorrichtung während des zweiten Bewegungsabschnitts 12 in der Aufnahmevorrichtung 17 beweglich ist.

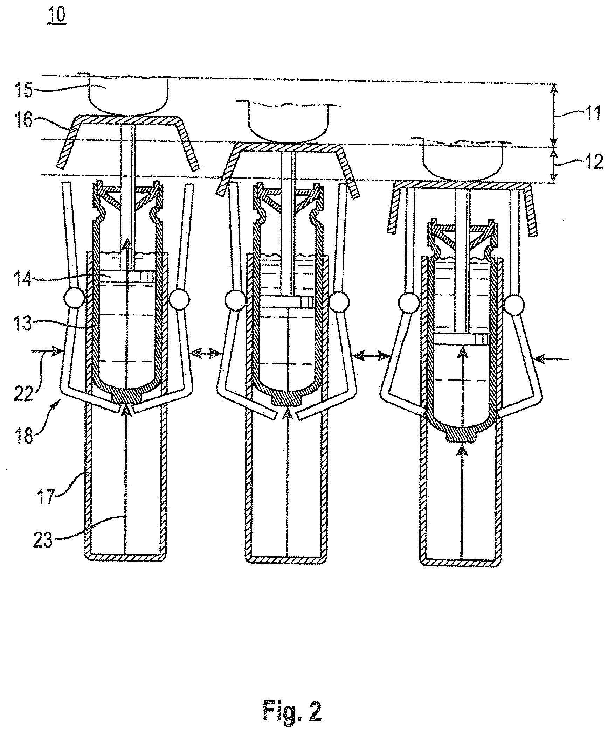

Beispielsweise kann die Haltevorrichtung 18 eine Klammer mit einem ersten Klammerelement 19 und einem zweiten Klammerelement 20 umfassen. Das erste Klammerelement 19 und/oder das zweite Klammerelement 20 können L-förmig, zum Beispiel als vorschnittige Klinke, ausgebildet sein, so dass sie in einem geschlossenen Zustand eine Unterseite der Dämpfungsvorrichtung, und insbesondere des Zylinders 13, umschließen. In einigen Ausführungsformen kann die Haltevorrichtung 18 eine Feder umfassen, so dass eine Kraft auf die Dämpfungsvorrichtung ausgeübt werden kann (in Figur 1 mit dem Pfeil 22 angedeutet). Hierdurch kann die Dämpfungsvorrichtung in der ersten Position gehalten werden, wie es beispielsweise in Figur 1 gezeigt ist. Die Funktionsweise der Haltevorrichtung 18 ist unter Bezugnahme auf die Figur 2 im Detail erläutert.

In typischen Ausführungsformen kann die Stoßdämpferanordnung 10 ein Federelement 23 umfassen, das ausgelegt ist, um die Dämpfungsvorrichtung in der Aufnahmevorrichtung 17 in die erste Position zu bewegen oder dort zu halten, insbesondere wenn keine Kraft auf die Dämpfungsvorrichtung wirkt. Das Federelement 23 kann die Dämpfungsvorrichtung wieder ausschieben und/oder die Dämpfungsvorrichtung wieder in die erste Position bringen.

Gemäß Ausführungsformen, weist der erste Bewegungsabschnitt eine Länge von mindestens 40 mm und insbesondere eine Länge von etwa 50 mm auf. Beispielsweise kann der erste Bewegungsabschnitt ein Dämpfungsweg sein.

Gemäß Ausführungsformen, weist der zweite Bewegungsabschnitt eine Länge von mindestens 20 mm und insbesondere eine Länge von etwa 30 mm aufweist. Beispielsweise kann der zweite Bewegungsabschnitt ein Schließweg eines Schlosses sein.

Gemäß Ausführungsformen, weist der erste Körper einen Schließbügel und der zweite Körper ein Schloss auf, die ausgelegt sind, um ineinander einzugreifen, wenn sich der erste Körper und der zweite Körper aufeinanderzu bewegen, wobei der erste Bewegungsabschnitt einem Bewegungsabschnitt vor dem Ineinandergreifen entspricht. Typischerweise entspricht der zweite Bewegungsabschnitt einem Bewegungsabschnitt wenigstens während des Ineinandergreifens, so dass während des Ineinandergreifens im Wesentlichen keine Dämpfung erfolgt. Beispielsweise kann der zweite Bewegungsabschnitt ein Schließweg des Schlosses sein.

Gemäß Ausführungsformen, umfasst die Stoßdämpferanordnung Einstellmittel zum Einstellen einer Dämpfungsstärke der Dämpfungsvorrichtung im ersten Bewegungsabschnitt. Die Einstellmittel können ein Gewinde umfassen, über das die Dämpfung eingestellt werden kann. Beispielsweise kann das Gewinde verstellbar sein, wodurch ein Dämpfungsweg der Dämpfungsvorrichtung veränderbar ist. Damit können beispielsweise gleiche Dämpfer für verschiedene Fahrzeuge verwendet werden.

Figur 2 zeigt eine perspektivische Ansicht der Stoßdämpferanordnung 10 der Figur 1 beim Durchlaufen des ersten Bewegungsabschnitts 11 und des zweiten Bewegungsabschnitts 12 gemäß Ausführungsformen der Offenbarung.

Im linken Abschnitt der Figur 2 ist die Stoßdämpferanordnung 10 während des ersten Bewegungsabschnitts 11 gezeigt, also während der Dämpfung beispielsweise einer Fahrzeugklappe. Die Haltevorrichtung 18 hält dabei die Dämpfungsvorrichtung in der Aufnahmevorrichtung 17 in der ersten Position. Im mittleren Abschnitt der Figur 2 ist schematisch der Übergang vom ersten Bewegungsabschnitt 11 in den zweiten Bewegungsabschnitt 12 gezeigt. Die Haltevorrichtung 18 wird entriegelt und gibt die Dämpfungsvorrichtung frei, so dass sie sich in der Aufnahmevorrichtung 18 bewegen kann.

Im rechten Abschnitt der Figur 2 ist die Stoßdämpferanordnung während des zweiten Bewegungsabschnitts 12 gezeigt, also wenn keine Dämpfung erfolgt. Die Haltevorrichtung 18 ist entriegelt (die vorschnittige Klinke und die Feder sind offen) und die Dämpfungsvorrichtung taucht ab. Gemäß Ausführungsformen kann hierbei das Federelement 23 komprimiert werden. Wenn beispielsweise die Fahrzeugklappe wieder geöffnet wird, kann das Federelement 23 die Dämpfungsvorrichtung wieder ausschieben und/oder in die erste Position bringen.

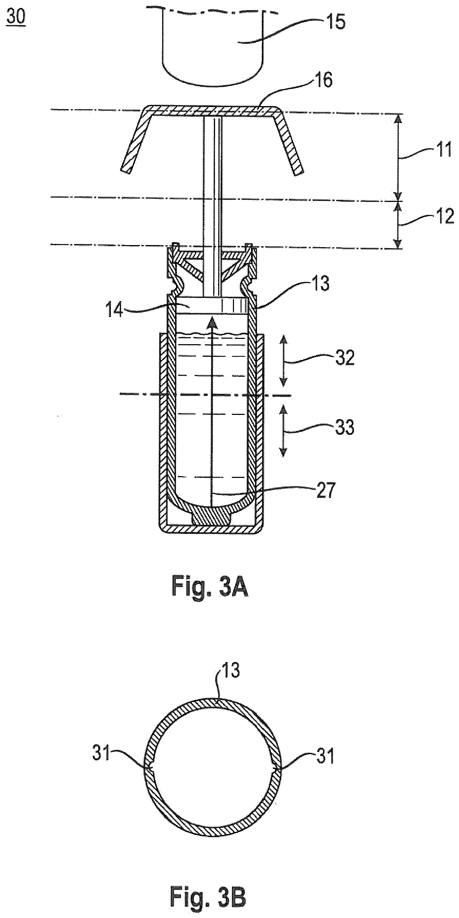

Figuren 3A und 3B zeigen schematische Darstellungen einer Stoßdämpferanordnung 30 gemäß weiteren Ausführungsformen mit einem Translationsdämpfer, Insbesondere ist eine Dämpfung über Translationsdämpfer mit über den Hub deutlich unterschiedlicher Einschubdämpfung gezeigt.

Gemäß einiger Ausführungsformen ist an einer Innenseite des Zylinders 13 im zweiten Bewegungsabschnitt wenigstens eine Vertiefung 31, insbesondere eine Nut, vorhanden ist. Beispielsweise entspricht der erste Bewegungsabschnitt 11 einem ersten Abschnitt 32 der Innenseite des Zylinders 13, und der zweite Bewegungsabschnitt 12 entspricht einem zweiten Abschnitt 33 der Innenseite des Zylinders 13.

Im Bereich ohne Nuten im Zylinder (Rohr) kann eine hohe Dämpfung erfolgen (durch das Bezugszeichen 27 angedeutet). Im Bereich mit den Nuten im Zylinder (Rohr) kann keine oder eine (sehr) geringe Dämpfung erfolgen. Dies kann durch die Umströmung beispielsweise einer Flüssigkeit (Öl) oder Gas zwischen dem Kolben 14 und dem Zylinder 13 durch die Nuten 31 erreicht werden. Gemäß einigen Ausführungsformen kann die wenigstens eine Vertiefung 31 eine eingepresste Nut im Zylinder 13 sein.

Durch das Bereitstellen der Vertiefung 31 zum Umströmen des Kolbens 14 sind weniger Bauteile im Nassbereich erforderlich.

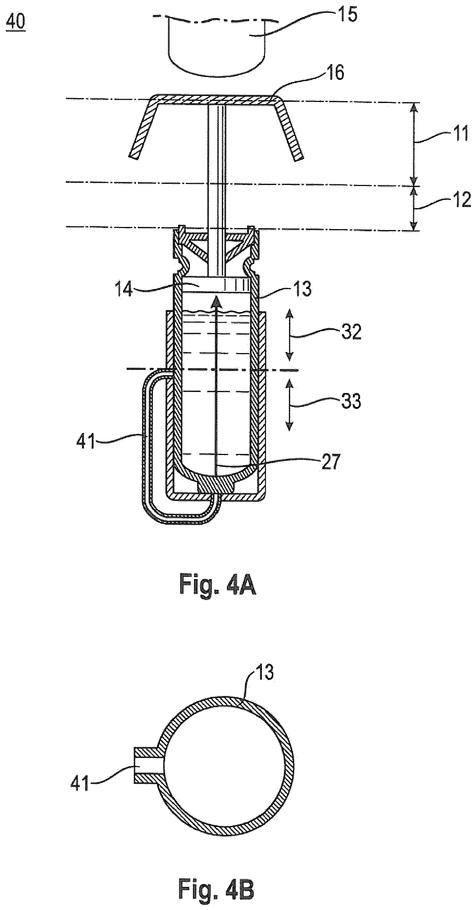

Figuren 4A und 4B sind schematische Darstellungen einer Stoßdämpferanordnung 40 gemäß weiteren Ausführungsformen mit einem Translationsdämpfer.

Gemäß einigen Ausführungsformen kann die Dämpfungsvorrichtung wenigstens einen Kanal 41 umfassen, der an einer Außenseite des Zylinders 13 oder der Aufnahmevorrichtung 17 angeordnet ist. Der Kanal 41 kann ein Überströmkanal sein. Der wenigstens eine Kanal 41 kann einen ersten oder oberen Endabschnitt des zweiten Bewegungsabschnitts mit einem zweiten oder unteren Endabschnitt des zweiten Bewegungsabschnitts verbinden. Beispielsweise entspricht der erste Bewegungsabschnitt einem ersten Abschnitt 32 der Innenseite des Zylinders 13, und der zweite Bewegungsabschnitt entspricht einem zweiten Abschnitt 33 der Innenseite des Zylinders 13.

Wenn sich der Kolben 14 im Bereich oberhalb einer Öffnung, die die Verbindung des Kanals 41 mit dem ersten oder oberen Endabschnitt des zweiten Bewegungsabschnitts 26 herstellt, befindet, kann eine Dämpfung erfolgen (durch das Bezugszeichen 27 angedeutet). Wenn sich der Kolben 14 im Bereich unterhalb dieser Öffnung befindet, erfolgt eine Umströmung beispielsweise einer Flüssigkeit (Öl) oder Gas, so dass keine oder eine (sehr) geringe Dämpfung erfolgt.

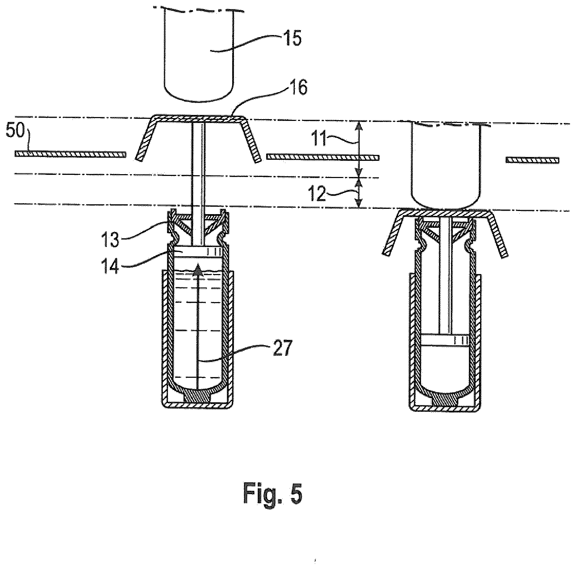

Figur 5 zeigt eine schematische Darstellung einer Stoßdämpferanordnung gemäß Ausführungsformen mit einem Translationsdämpfer in Relation zu einer Motorhaube.

In Figur 5 ist die Oberkante eines Einbauorts, beispielsweise einer Fahrzeugklappe (z.B. Motorhabe), mit dem Bezugszeichen 50 bezeichnet. Im linken Abschnitt der Figur 5 ist die Stoßdämpferanordnung vor dem Klappenkontakt gezeigt, und im rechten Abschnitt ist die Stoßdämpferanordnung nach dem Klappenkontakt gezeigt, also wenn die Klappe geschlossen ist.

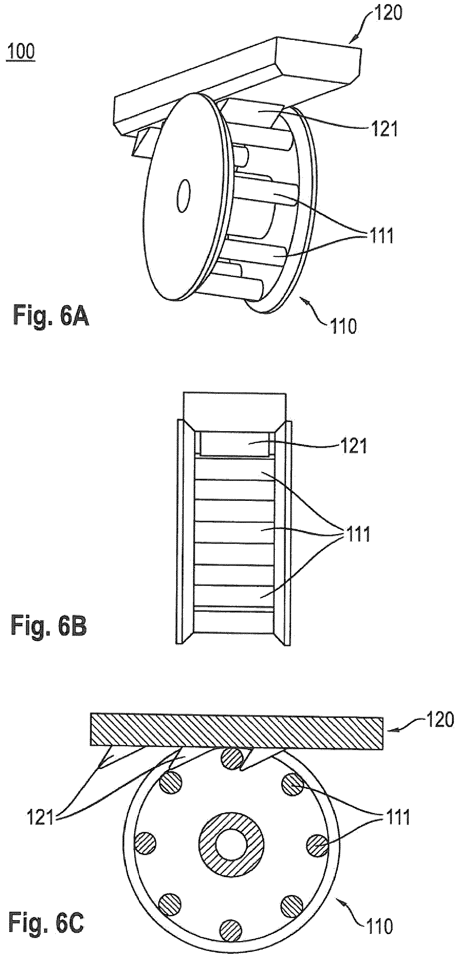

Gemäß den hier beschriebenen Ausführungsformen kann vermieden werden, dass aus der Fahrzeugklappe oder der Fahrzeugstruktur bzw. der Fahrzeugkarosserie ein (z.B. 50 mm) langer Stößel der Stoßdämpferanordnung vorsteht. Insbesondere kann sich ein Teil (z.B. ein Gummi-Pin) an der Klappe befinden und das Gegenstück (die Dämpfungsvorrichtung, die die Dämpfung enthält) an der Karosserie abtauchen. Es kann somit eine Aufteilung des Stößelhubs stattfinden, und der Benutzer sieht keinen überlangen Stößel. Figuren 6A bis 6C zeigen schematische Darstellungen einer Stoßdämpferanordnung 100 gemäß weiteren Ausführungsformen mit einem Rotationsdämpfer.

Gemäß Ausführungsformen, umfasst die Dämpfungsvorrichtung ein drehbares Dämpfungsmittel 110 mit wenigstens einem ersten Eingriffselement 111, und ein zweites Eingriffselement 120. Im ersten Bewegungsabschnitt kann das zweite Eingriffselement 120 in das erste Eingriffselement 111 des drehbaren Dämpfungsmittels 110 eingreifen, und im zweiten Bewegungsabschnitt kann das zweite Eingriffselement 120 nicht in das erste Eingriffselement 111 des drehbaren Dämpfungsmittels 110 eingreifen. Das zweite Eingriffselement 120 kann Vorsprünge oder Zinken 121 umfassen, die ausgelegt sind, um in das erste Eingriffselement 111 des drehbaren Dämpfungsmittels 110 einzugreifen.

In einigen Ausführungsformen kann das drehbare Dämpfungsmittel 110 im ersten Bewegungsabschnitt eine Rückstellkraft bereitstellen, die die Dämpfung im ersten Bewegungsabschnitt bewirkt.

Gemäß hier beschriebener Ausführungsformen ist das drehbare Dämpfungsmittel 110 am zweiten Körper anordenbar und/oder das zweite Eingriffselement 120 ist am ersten Körper anordenbar.

Die Dämpfungsvorrichtung kann eine rotatorische Dämpfungsvorrichtung sein (>360°), und kann nur in einer Richtung wirksam sein (beispielsweise wenn keine Rückstellung des Dämpfers notwendig ist). Die Dämpfungsvorrichtung kann auch eine rotatorische Dämpfungsvorrichtung sein (ca. 180°), und kann in beide Drehrichtungen wirksam sein (beispielsweise wenn eine Rückstellung des Dämpfers notwendig ist).

Gemäß einigen Ausführungsformen kann die Dämpfungsvorrichtung ein Treibrad am Dämpfer (Hamsterrad) umfassen (drehbares Dämpfungsmittel 110). Das zweite Eingriffselement 120 kann eine Zahnstange sein oder umfassen. Das zweite Eingriffselement 120 kann beispielsweise ein Rechen mit schief eingesetzten Zinken sein. Eine Dämpfung erfolgt nur solange die Zinken im Eingriff sind. Die Zinken können in Dämpfrichtung selbstverstärkend sein, was vorteilhaft gegenüber Zahnstange und Zahnrad ist. Eine Rückstellung kann über eine Feder, die die Rückstellkraft bewirkt, erfolgen. Dadurch ist eine Rückstellung einfach, schnell und insbesondere mit kleinen Kräften möglich.

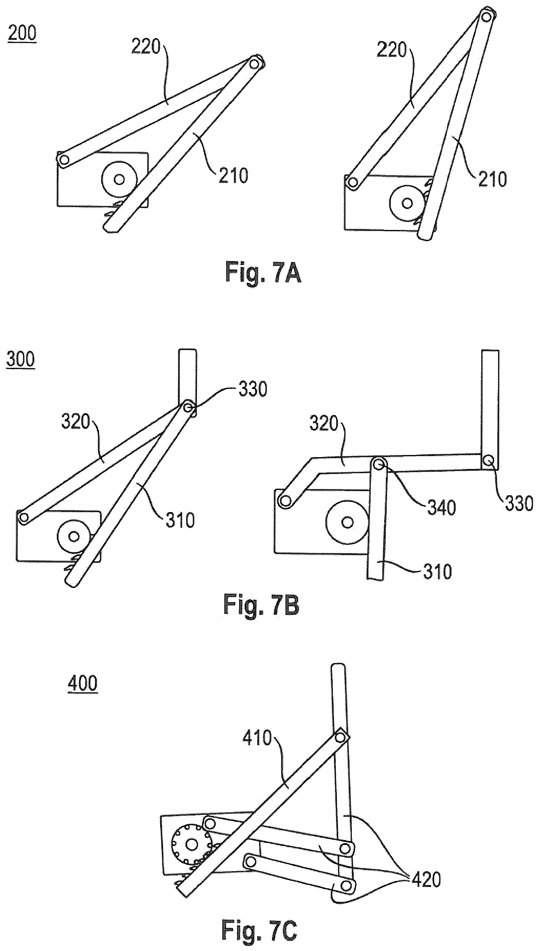

Figuren 7A bis 7F zeigen schematische Darstellungen von Stoßdämpferanordnungen gemäß weiteren Ausführungsformen mit einem Rotationsdämpfer.

In Figur 7A ist eine Dämpfungsvorrichtung 200 mit einer Zahnstange 210 und Führungshebel 220 mit X-Versatz an der Klappe gezeigt.

In Figur 7B ist eine Dämpfungsvorrichtung 300 mit Zahnstange 310 und Führungshebel 320 ohne X-Versatz an der Klappe gezeigt. Im linken Beispiel sind Zahnstange 310 und Führungshebel 320 dabei an einer gemeinsamen Drehachse 330 an der Klappe befestigt. Im rechten Beispiel ist die Zahnstange 310 an einer Drehachse 340 beispielsweise an einem mittleren Abschnitt des Führungshebels 320 befestigt, und der Führungshebel 320 ist an der Drehachse 330 an der Klappe befestigt (Befestigung mit Zusatzelement). In Figur 7C ist eine Dämpfungsvorrichtung 400 mit Zahnstange 410 und Führungshebeln 420 über eine 4-Gelek-Kinematik mit (sehr) geringem X-Versatz an der Klappe gezeigt. Die 4-Gelek-Kinematik kann dabei drei Führungshebel 420 umfassen.

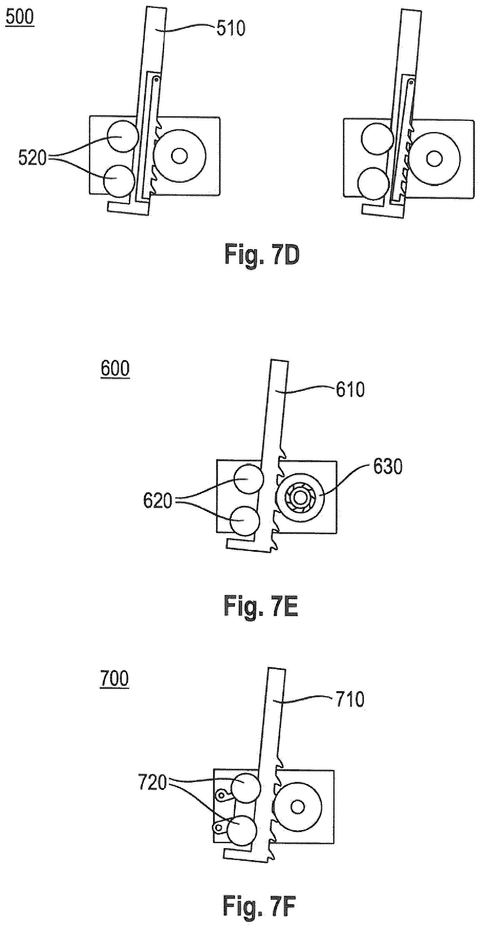

In Figur 7D ist eine Dämpfungsvorrichtung 500 mit einer Linearführung 520 einer Zahnstange 510 gezeigt. Die Linearführung 520 kann verschwenkbar sein. Weiter kann die Linearführung 520 wenigstens zwei Führungsrollen umfassen.

In Figur 7E ist eine Dämpfungsvorrichtung 600 mit einer Linearführung 620 einer Zahnstange 610 gezeigt, wobei eine Ratsche 630 zwischen Dämpfer und Zahnstange 610 angeordnet ist.

In Figur 7F ist eine Dämpfungsvorrichtung 700 mit einer Linearführung 720 einer Zahnstange 710 mit verschwenkbaren Rollen gezeigt.

Gemäß einem Aspekt der vorliegenden Erfindung ist ein Fahrzeug mit einer oben beschriebenen Stoßdämpferanordnung angegeben, wobei der erste Körper eine Fahrzeugtür oder Fahrzeugklappe ist, und wobei der zweite Körper eine Fahrzeugkarosserie ist.

Gemäß einem anderen Aspekt ist ein Verfahren zum Dämpfen von Stößen zwischen einer einen ersten Körper bildenden Fahrzeugtür oder Fahrzeugklappe und einer einen zweiten Körper bildenden Fahrzeugkarosserie, wobei eine Dämpfungsvorrichtung zwischen dem ersten Körper und dem zweiten Körper angeordnet ist, angegeben. Das Verfahren umfasst ein Durchlaufen eines ersten Bewegungsabschnitts der Dämpfungsvorrichtung, in dem eine Dämpfung erfolgt, und ein Durchlaufen eines zweiten Bewegungsabschnitts der Dämpfungsvorrichtung, in dem keine oder eine sehr geringe Dämpfung erfolgt.

Das Verfahren verwendet die oben beschriebene Stoßdämpferanordnung.

Die Stoßdämpferanordnung wird zum Dämpfen beim Schließen einer Fahrzeugtür oder Fahrzeugklappe verwendet.

Die Dämpfung beginnt dabei früher und kann beispielsweise beim ersten Schlosskontakt beendet sein. Der Dämpfungsweg kann vor einem Auftreffen auf das Schloss im Vergleich zu herkömmlichen Stoßdämpferanordnungen vergrößert sein (z.B. 50 mm). Die geschwindigkeitsabhängige Dämpfung wirkt nur vor Erreichen des Zeitpunkts, bei dem Schloss und Schließbügel in Kontakt treten. Die Geschwindigkeit kann also soweit reduziert werden, dass nur noch die Schließgeschwindigkeit des Schlosses anliegt, bei der das Schloss sicher schließt. Die Stoßdämpferanordnung gemäß den hier beschriebenen Ausführungsformen bietet damit eine weg- und geschwindigkeitsabhängige Dämpfung.

Durch die Stoßdämpferanordnung gemäß den hier beschriebenen Ausführungsformen können Beschädigungen vermindert werden. Insbesondere sind höhere Schließgeschwindigkeit möglich, ohne eine Beschädigung der Peripherie zu verursachen. Es ist auch eine kleinere Schließgeschwindigkeit möglich, da während der Schlossschließung nicht gedämpft wird. Weiter werden die Durchschlagpuffer (die Beschädigung verhindern sollen) vermindert, die aber nur die Haube stärker vorspannen und die Mindestschließgeschwindigkeit erhöhen. Die Vorspannung der Puffer erhöht auch die Entriegelungskräfte, wodurch die Entriegelungskräfte reduziert werden. Auch können beispielsweise optisch herausstehende Stößel minimiert werden. Eine Minimierung der Schließgeräusche ist möglich, da kein starkes Aufeinanderprallen des ersten Körper und des zweiten Körpers bzw. von Teilen davon erfolgt.

Um zu vermeiden, dass aus Klappe oder Fahrzeugstruktur ein (z.B. 50 mm) langer Stößel der Stoßdämpferanordnung vorsteht, kann sich ein Teil (z.B. ein Gummi-Pin) an der Klappe befinden und das Gegenstück (die Dämpfungsvorrichtung, die die Dämpfung enthält) an der Karosserie abtauchen. Es kann somit eine Aufteilung des Stößelhubs stattfinden, und der Benutzer sieht keinen überlangen Stößel. Die Dämpfungsvorrichtung kann beispielsweise über ein Gewinde verstellt werden, wodurch sich der Dämpfungsweg und somit die Charakteristik ändert. Damit können beispielsweise gleiche Dämpfer für verschiedene Fahrzeuge verwendet werden. Falls eine Rückstellung für den Dämpfer notwendig ist (Feder) kann die Auswurffeder für das Schloss reduziert werden. Eine Dämpfercharakteristik zwischen Ein- und Ausschieben kann unterschiedlich sein. Gemäß hier beschriebener Ausführungsformen ist eine Fugenreduktion am Fahrzeug möglich, was unter anderem eine ansprechende Optik bewirkt, da kleine Fugen vom Käufer oftmals als hochwertig erachtet werden.

## Patentansprüche

1. Fahrzeug mit zumindest einer einen ersten Körper bildenden Fahrzeugtür oder Fahrzeugklappe und einer einen zweiten Körper bildenden Fahrzeugkarosserie, wobei die Fahrzeugtür oder Fahrzeugklappe schwenkbar an der Fahrzeugkarosserie angebracht ist und im geschlossenen Zustand mittels zumindest eines mit einem Schließelement zusammenwirkenden Schlosses an der Fahrzeugkarosserie festlegbar ist, und
mit einer Stoßdämpferanordnung (10, 30, 40, 100-700) zum Dämpfen von Stößen zwischen der Fahrzeugkarosserie und der Fahrzeugtür oder Fahrzeugklappe beim Schließen der Fahrzeugtür oder Fahrzeugklappe,
wobei die Stoßdämpferanordnung (10, 30, 40, 100-700) eine Dämpfungsvorrichtung aufweist, die zwischen der Fahrzeugkarosserie und der Fahrzeugtür oder Fahrzeugklappe wirksam angeordnet ist,
wobei die Dämpfungsvorrichtung relativ zueinander entlang eines Bewegungswegs bewegbare Elemente (13, 14; 13, 14, 17; 110, 120) aufweist,
wobei die Dämpfungsvorrichtung einen ersten Bewegungsabschnitt der relativ zueinander bewegbaren Elemente (13, 14; 13, 14, 17; 110, 120), in dem eine Dämpfung erfolgt, und einen zweiten Bewegungsabschnitt der relativ zueinander bewegbaren Elemente (13, 14; 13, 14, 17; 110, 120), in dem keine oder eine sehr geringe Dämpfung erfolgt, aufweist und
wobei die Stoßdämpferanordnung (10, 30, 40, 100-700) so ausgelegt ist, dass die relativ zueinander bewegbaren Elemente (13, 14; 13, 14, 17; 110, 120) zuerst den ersten Bewegungsabschnitt und dann den zweiten Bewegungsabschnitt durchlaufen, wenn sich die Fahrzeugtür oder Fahrzeugklappe auf die Fahrzeugkarosserie zu bewegt, und wobei der erste Bewegungsabschnitt so angeordnet ist, dass die Bewegung entlang des ersten Bewegungsabschnitts beendet ist, wenn das Schloss und das Schließelement miteinander in Kontakt geraten.

2. Fahrzeug nach Anspruch 1,
**dadurch gekennzeichnet,**
**dass** die Dämpfungsvorrichtung der Stoßdämpferanordnung (10, 30, 40) einen Zylinder (13) und einen im Zylinder (13) bewegbaren Kolben (14) umfasst, wobei ein Bewegungsweg des Kolbens im Zylinder (13) wenigstens den ersten Bewegungsabschnitt (11, 32) umfasst.

3. Fahrzeug nach Anspruch 2,
**dadurch gekennzeichnet,**
- **dass** die Stoßdämpferanordnung (10, 30, 40) ein Kontaktelement (15) umfasst, das am ersten Körper anordenbar ist,
- **dass** die Dämpfungsvorrichtung am zweiten Körper anordenbar ist, und
- **dass** die Dämpfungsvorrichtung so ausgelegt ist, dass bei einem Auftreffen des Kontaktelements (15) auf den Kolben (14) zuerst der erste Bewegungsabschnitt (11, 32) und dann der zweite Bewegungsabschnitt (11, 33) durchlaufen werden.

4. Fahrzeug nach Anspruch 2 oder 3,
**dadurch gekennzeichnet,**
- **dass** die Stoßdämpferanordnung (10) eine Aufnahmevorrichtung (17) für die Dämpfungsvorrichtung umfasst, und
- **dass** die Dämpfungsvorrichtung in der Aufnahmevorrichtung (17) bewegbar ist, wobei der Bewegungsweg des Kolbens (14) im Zylinder (13) den ersten Bewegungsabschnitt (11, 32) und ein Bewegungsweg der Dämpfungsvorrichtung in der Aufnahmevorrichtung (17) den zweiten Bewegungsabschnitt (12, 33) umfasst.

5. Fahrzeug nach Anspruch 4,
**dadurch gekennzeichnet,**
**dass** die Stoßdämpferanordnung (10) eine Haltevorrichtung (18), insbesondere eine Klammer, umfasst, die ausgelegt ist, um die Dämpfungsvorrichtung in der Aufnahmevorrichtung (17) in einer ersten Position zu halten, während der erste Bewegungsabschnitt (11, 32) durchlaufen wird, und die ausgelegt ist, um die Dämpfungsvorrichtung freizugeben, so dass die Dämpfungsvorrichtung während des Durchlaufens des zweiten Bewegungsabschnitts (12, 33) in der Aufnahmevorrichtung (17) beweglich ist.

6. Fahrzeug nach Anspruch 5,
**dadurch gekennzeichnet,**
**dass** die Stoßdämpferanordnung (10) ein Federelement (23) umfasst, das ausgelegt ist, um die Dämpfungsvorrichtung in der Aufnahmevorrichtung (17) in die erste Position zu bewegen oder dort zu halten, wenn keine Kraft auf die Dämpfungsvorrichtung wirkt.

7. Fahrzeug nach Anspruch 2 oder 3,
**dadurch gekennzeichnet,**
**dass** an einer Innenseite des Zylinders (13) der Stoßdämpferanordnung (30) im zweiten Bewegungsabschnitt (33) wenigstens eine Vertiefung (31), insbesondere eine Nut, vorhanden ist.

8. Fahrzeug nach Anspruch 2 oder 3,
**dadurch gekennzeichnet,**
**dass** die Dämpfungsvorrichtung der Stoßdämpferanordnung (40) wenigstens einen Kanal (41) umfasst, der an einer Außenseite des Zylinders (13) angeordnet ist, und der einen ersten Endabschnitt des zweiten Bewegungsabschnitts (12, 33) mit einem zweiten Endabschnitt des zweiten Bewegungsabschnitts (12, 33) verbindet.

9. Fahrzeug nach einem der vorhergehenden Ansprüche,
**dadurch gekennzeichnet,**
**dass** die Dämpfungsvorrichtung der Stoßdämpferanordnung (10, 30, 40, 100) eine hydraulische oder pneumatische Dämpfungsvorrichtung ist.

10. Fahrzeug nach Anspruch 1,
**dadurch gekennzeichnet,**
**dass** die Dämpfungsvorrichtung der Stoßdämpferanordnung (100) umfasst:
- ein drehbares Dämpfungsmittel (110) mit wenigstens einem ersten Eingriffselement (111), und
- ein zweites Eingriffselement (120, 121),
- wobei im ersten Bewegungsabschnitt das zweite Eingriffselement (120, 121) in das erste Eingriffselement (111) des drehbaren Dämpfungsmittels (110) eingreift, und
- wobei im zweiten Bewegungsabschnitt das zweite Eingriffselement (120, 121) nicht in das erste Eingriffselement (111) des drehbaren Dämpfungsmittels (110) eingreift.

11. Fahrzeug nach Anspruch 10,
**dadurch gekennzeichnet,**
**dass** das drehbare Dämpfungsmittel (110) der Stoßdämpferanordnung (100) im ersten Bewegungsabschnitt eine Rückstellkraft bereitstellt, die die Dämpfung im ersten Bewegungsabschnitt bewirkt.

12. Fahrzeug nach Anspruch 10 oder 11,
**dadurch gekennzeichnet,**
**dass** das drehbare Dämpfungsmittel (110) der Stoßdämpferanordnung (100) am zweiten Körper anordenbar ist und das zweite Eingriffselement (120) am ersten Körper anordenbar ist.

13. Fahrzeug nach Anspruch 1,
**dadurch gekennzeichnet,**
**dass** das Schließelement einen Schließbügel aufweist, wobei der Schließbügel und das Schloss ausgelegt sind, um ineinander einzugreifen, wenn sich der erste Körper und der zweite Körper aufeinander zu bewegen, wobei der erste Bewegungsabschnitt einem Bewegungsabschnitt vor dem Ineinandergreifen entspricht und dass
der zweite Bewegungsabschnitt einem Bewegungsabschnitt wenigstens während des Ineinandergreifens entspricht, so dass während des Ineinandergreifens im Wesentlichen keine Dämpfung erfolgt.

14. Fahrzeug nach einem der vorstehenden Ansprüche,
weiter umfassend Einstellmittel zum Einstellen einer Dämpfungsstärke der Dämpfungsvorrichtung im ersten Bewegungsabschnitt.

15. Verfahren zum Dämpfen von Stößen zwischen einer Fahrzeugkarosserie und einer Fahrzeugtür oder Fahrzeugklappe beim Schließen der Fahrzeugtür oder Fahrzeugklappe in einem Fahrzeug gemäß einem der vorhergehenden Ansprüche,
mit den Schritten:
- Durchlaufen eines ersten Bewegungsabschnitts der Dämpfungsvorrichtung, in dem eine Dämpfung erfolgt, bis das Schloss und das Schließelement miteinander in Kontakt geraten und
- anschließendes Durchlaufen eines zweiten Bewegungsabschnitts der Dämpfungsvorrichtung, in dem keine oder eine sehr geringe Dämpfung erfolgt.

## Claims

1. Vehicle with at least one vehicle door or vehicle liftgate, which forms a first body, and a vehicle body, which forms a second body, the vehicle door or vehicle liftgate being attached pivotably to the vehicle body, and it being possible for this vehicle door or vehicle liftgate to be fixed on the vehicle body in the closed state by means of at least one lock which interacts with a closing element, and
with a damper arrangement (10, 30, 40, 100-700) for damping impacts between the vehicle body and the vehicle door or vehicle liftgate during closing of the vehicle door or vehicle liftgate,
the damper arrangement (10, 30, 40, 100-700) having a damping apparatus which is arranged so as to be active between the vehicle body and the vehicle door or vehicle tailgate,
the damping apparatus having elements (13, 14; 13, 14, 17; 110, 120) which can move relative to one another along a movement travel,
the damping apparatus having a first movement portion of the elements (13, 14; 13, 14, 17; 110, 120) which can move relative to one another, in which first movement portion damping takes place, and a second movement portion of the elements (13, 14; 13, 14, 17; 110, 120) which can move relative to one another, in which second movement portion no damping or only very minor damping takes place, and
the damper arrangement (10, 30, 40, 100-700) being designed in such a way that the elements (13, 14; 13, 14, 17; 110, 120) which can move relative to one another pass through first of all the first movement portion and then the second movement portion when the vehicle door or vehicle tailgate moves towards the vehicle body, and the first movement portion being arranged in such a way that the movement along the first movement portion is ended when the lock and the closing element come into contact with one another.

2. Vehicle according to Claim 1, **characterized in that** the damping apparatus of the damper arrangement (10, 30, 40) comprises a cylinder (13) and a piston (14) which can be moved in the cylinder (13), a movement travel of the piston in the cylinder (13) comprising at least the first movement portion (11, 32).

3. Vehicle according to Claim 2, **characterized**
- **in that** the damper arrangement (10, 30, 40) comprises a contact element (15) which can be arranged on the first body,
- **in that** the damping apparatus can be arranged on the second body, and
- **in that** the damping apparatus is designed in such a way that, in the case of the contact element (15) coming into contact with the piston (14), first of all the first movement portion (11, 32) and then the second movement portion (11, 33) are passed through.

4. Vehicle according to Claim 2 or 3, **characterized**
- **in that** the damper arrangement (10) comprises a receiving apparatus (17) for the damping apparatus, and
- **in that** the damping apparatus can be moved in the receiving apparatus (17), the movement travel of the piston (14) in the cylinder (13) comprising the first movement portion (11, 32), and a movement travel of the damping apparatus in the receiving apparatus (17) comprising the second movement portion (12, 33).

5. Vehicle according to Claim 4, **characterized in that** the damper arrangement (10) comprises a holding apparatus (18), in particular a bracket, in order to hold the damping apparatus in the receiving apparatus (17) in a first position while the first movement portion (11, 32) is passed through, and which is designed to release the damping apparatus, with the result that the damping apparatus can be moved in the receiving apparatus (17) while the second movement portion (12, 13) is passed through.

6. Vehicle according to Claim 5, **characterized in that** the damper arrangement (10) comprises a spring element (23) which is designed to move the damping apparatus in the receiving apparatus (17) into the first position or to hold it there when no force acts on the damping apparatus.

7. Vehicle according to Claim 2 or 3, **characterized in that** there is at least one depression (31), in particular one groove, on an inner side of the cylinder (13) of the damper arrangement (30) in the second movement portion (33) .

8. Vehicle according to Claim 2 or 3, **characterized in that** the damping apparatus of the damper arrangement (40) comprises at least one channel (41) which is arranged on an outer side of the cylinder (13) and connects a first end portion of the second movement portion (12, 33) to a second end portion of the second movement portion (12, 33) .

9. Vehicle according to one of the preceding claims, **characterized in that** the damping apparatus of the damper arrangement (10, 30, 40, 100) is a hydraulic or pneumatic damping apparatus.

10. Vehicle according to Claim one, **characterized in that** the damping apparatus of the damper arrangement (100) comprises:
- a rotatable damping means (110) with at least one first engagement element (111), and
- a second engagement element (120, 121),
- the second engagement element (120, 121) engaging into the first engagement element (111) of the rotatable damping means (110) in the first movement portion, and
- the second engagement element (120, 121) not engaging into the first engagement element (111) of the rotatable damping means (110) in the second movement portion.

11. Vehicle according to Claim 10, **characterized in that** the rotatable damping means (110) of the damper arrangement (100) provides a restoring force in the first movement portion, which restoring force brings about the damping in the first movement portion.

12. Vehicle according to Claim 10 or 11, **characterized in that** the rotatable damping means (110) of the damper arrangement (100) can be arranged on the second body, and the second engagement means (120) can be arranged on the first body.

13. Vehicle according to Claim 1, **characterized in that** the closing element has a striker, the striker and the lock being designed to engage into one another when the first body and the second body move towards one another, the first movement portion corresponding to a movement portion before engaging into one another, and **in that** the second movement portion corresponds to a movement portion at least during engaging into one another, with the result that substantially no damping takes place during engaging into one another.

14. Vehicle according to one of the preceding claims, further comprising setting means for setting a damping magnitude of the damping apparatus in the first movement portion.

15. Method for damping impacts between a vehicle body and a vehicle door or vehicle liftgate during closing of the vehicle door or vehicle liftgate in a vehicle according to one of the preceding claims, with the steps:
- passing through a first movement portion of the damping apparatus, in which first movement portion damping takes place, until the lock and the closing element come into contact with one another, and
- subsequently passing through a second movement portion of the damping apparatus, in which second movement portion no damping or very minor damping takes place.

## Revendications

1. Véhicule avec au moins une porte de véhicule ou un hayon de véhicule formant un premier corps et une carrosserie de véhicule formant un deuxième corps, la porte de véhicule ou le hayon de véhicule étant monté(e) de manière pivotante sur la carrosserie de véhicule et pouvant être fixé(e) à la carrosserie de véhicule à l'état fermé au moyen d'au moins une serrure coopérant avec un élément de fermeture, et
avec un agencement d'amortissement des chocs (10, 30, 40, 100-700) pour l'amortissement de chocs entre la carrosserie du véhicule et la porte de véhicule ou le hayon de véhicule lors de la fermeture de la porte de véhicule ou du hayon de véhicule,
l'agencement d'amortissement des chocs (10, 30, 40, 100-700) présentant un dispositif d'amortissement, qui est agencé de manière opérationnelle entre la carrosserie de véhicule et la porte de véhicule ou le hayon de véhicule, le dispositif d'amortissement présentant des éléments (13, 14 ; 13, 14, 17 ; 110, 120) déplaçables les uns par rapport aux autres le long d'un trajet de déplacement, le dispositif d'amortissement présentant une première section de déplacement des éléments déplaçables les uns par rapport aux autres (13, 14 ; 13, 14, 17 ; 110, 120), dans laquelle un amortissement a lieu, et une deuxième section de déplacement des éléments déplaçables les uns par rapport aux autres (13, 14 ; 13, 14, 17 ; 110, 120), dans laquelle aucun amortissement n'a lieu ou un amortissement très faible a lieu, et
l'agencement d'amortissement des chocs (10, 30, 40, 100-700) étant conçu de telle sorte que les éléments déplaçables les uns par rapport aux autres (13, 14 ; 13, 14, 17 ; 110, 120) parcourent d'abord par la première section de déplacement, puis la deuxième section de déplacement lorsque la porte de véhicule ou le hayon de véhicule se déplace vers la carrosserie de véhicule, et la première section de déplacement étant agencée de telle sorte que le déplacement le long de la première section de déplacement est terminé lorsque la serrure et l'élément de fermeture entrent en contact l'un avec l'autre.

2. Véhicule selon la revendication 1,
**caractérisé**
**en ce que** le dispositif d'amortissement de l'agencement d'amortissement des chocs (10, 30, 40) comprend un cylindre (13) et un piston (14) déplaçable dans le cylindre (13), un trajet de déplacement du piston dans le cylindre (13) comprenant au moins la première section de déplacement (11, 32).

3. Véhicule selon la revendication 2,
**caractérisé**
- **en ce que** l'agencement d'amortissement des chocs (10, 30, 40) comprend un élément de contact (15) qui peut être agencé sur le premier corps,
- le dispositif d'amortissement peut être agencé sur le deuxième corps, et
- le dispositif d'amortissement est conçu de telle sorte que, lorsque l'élément de contact (15) rencontre le piston (14), d'abord la première section de déplacement (11, 32) et ensuite la deuxième section de déplacement (11, 33) sont parcourues.

4. Véhicule selon la revendication 2 ou 3,
**caractérisé**
- **en ce que** l'agencement d'amortissement des chocs (10) comprend un dispositif de réception (17) pour le dispositif d'amortissement, et
- **en ce que** le dispositif d'amortissement est déplaçable dans le dispositif de réception (17), le trajet de déplacement du piston (14) dans le cylindre (13) comprenant la première section de déplacement (11, 32) et un trajet de déplacement du dispositif d'amortissement dans le dispositif de réception (17) comprenant la deuxième section de déplacement (12, 33).

5. Véhicule selon la revendication 4,
**caractérisé**
**en ce que** l'agencement d'amortissement des chocs (10) comprend un dispositif de maintien (18), notamment une pince, qui est conçu pour maintenir le dispositif d'amortissement dans le dispositif de réception (17) dans une première position pendant que la première section de déplacement (11, 32) est parcourue et qui est conçu pour libérer le dispositif d'amortissement de telle sorte que le dispositif d'amortissement est mobile dans le dispositif de réception (17) pendant le parcours de la deuxième section de déplacement (12, 33).

6. Véhicule selon la revendication 5,
**caractérisé**
**en ce que** l'agencement d'amortissement des chocs (10) comprend un élément à ressort (23) qui est conçu pour déplacer le dispositif d'amortissement dans le dispositif de réception (17) dans la première position ou l'y maintenir lorsqu'aucune force n'agit sur le dispositif d'amortissement.

7. Véhicule selon la revendication 2 ou 3,
**caractérisé**
**en ce qu'**au moins un creux (31), notamment une rainure, est présent sur un côté intérieur du cylindre (13) de l'agencement d'amortissement des chocs (30) dans la deuxième section de déplacement (33).

8. Véhicule selon la revendication 2 ou 3,
**caractérisé**
**en ce que** le dispositif d'amortissement de l'agencement d'amortissement des chocs (40) comprend au moins un canal (41) qui est agencé sur un côté extérieur du cylindre (13) et qui relie une première section d'extrémité de la deuxième section de déplacement (12, 33) à une deuxième section d'extrémité de la deuxième section de déplacement (12, 33).

9. Véhicule selon l'une quelconque des revendications précédentes,
**caractérisé**
**en ce que** le dispositif d'amortissement de l'agencement d'amortissement des chocs (10, 30, 40, 100) est un dispositif d'amortissement hydraulique ou pneumatique.

10. Véhicule selon la revendication 1,
**caractérisé**
**en ce que** le dispositif d'amortissement de l'agencement d'amortissement des chocs (100) comprend :
- un moyen d'amortissement rotatif (110) avec au moins un premier élément d'engagement (111), et
- un deuxième élément d'engagement (120, 121),
- dans la première section de déplacement, le deuxième élément d'engagement (120, 121) s'engageant dans le premier élément d'engagement (111) du moyen d'amortissement rotatif (110), et
- dans la deuxième section de déplacement, le deuxième élément d'engagement (120, 121) ne s'engageant pas dans le premier élément d'engagement (111) du moyen d'amortissement rotatif (110).

11. Véhicule selon la revendication 10,
**caractérisé**
**en ce que** le moyen d'amortissement rotatif (110) de l'agencement d'amortissement des chocs (100) fournit une force de rappel dans la première section du déplacement, qui produit l'amortissement dans la première section de déplacement.

12. Véhicule selon la revendication 10 ou 11,
**caractérisé**
**en ce que** le moyen d'amortissement rotatif (110) de l'agencement d'amortissement des chocs (100) peut être agencé sur le deuxième corps et le deuxième élément d'engagement (120) peut être agencé sur le premier corps.

13. Véhicule selon la revendication 1,
**caractérisé**
**en ce que** l'élément de fermeture présente une gâche, la gâche et la serrure étant conçues pour s'engager l'une dans l'autre lorsque le premier corps et le deuxième corps se déplacent l'un vers l'autre, la première section de déplacement correspondant à une section de déplacement avant l'engagement et en ce que
la deuxième section de déplacement correspond à une section de déplacement au moins pendant l'engagement, de telle sorte qu'essentiellement aucun amortissement n'a lieu pendant l'engagement.

14. Véhicule selon l'une quelconque des revendications précédentes, comprenant en outre des moyens de réglage pour régler l'intensité d'amortissement du dispositif d'amortissement dans la première section de déplacement.

15. Procédé d'amortissement de chocs entre une carrosserie de véhicule et une porte de véhicule ou un hayon de véhicule lors de la fermeture de la porte de véhicule ou du hayon de véhicule dans un véhicule selon l'une quelconque des revendications précédentes, comprenant les étapes suivantes :
- le parcours d'une première section de déplacement du dispositif d'amortissement dans laquelle un amortissement a lieu jusqu'à ce que la serrure et l'élément de fermeture entrent en contact l'un avec l'autre, et
- ensuite le parcours d'une deuxième section de déplacement du dispositif d'amortissement dans laquelle aucun amortissement n'a lieu ou un amortissement très faible a lieu.
